Europäisches Patentamt

European Patent Office

Office européen des brevets

(11) Publication number: **0 588 353 A2**

# EUROPEAN PATENT APPLICATION

(21) Application number: 93114953.8

(22) Date of filing: 16.09.93

(51) Int. Cl.5: **B62K 15/00**, A61G 5/04

(30) Priority: **17.09.92 NZ 24436992**

(43) Date of publication of application:
**23.03.94 Bulletin 94/12**

(84) Designated Contracting States:
**DE FR GB NL**

(71) Applicant: FISHER & PAYKEL LIMITED
78 Springs Road
East Tamaki, Auckland(NZ)

(72) Inventor: Zwaan, Paul Francis
39 Mangere Road
Otahuhu Auckland(NZ)
Inventor: Nicholson, Michael Robert
53 Raurenga Avenue
Royal Oak Auckland(NZ)

(74) Representative: Brown, John David et al
FORRESTER & BOEHMERT
Franz-Joseph-Strasse 38
D-80801 München (DE)

(54) **Personal mobility vehicle.**

(57) A personal mobility vehicle (1) for the disabled such as a scooter which has an electric drive unit (30) separable from the main chassis of the vehicle. Mechanical coupling between these two units includes a pivotal hook means (60) which engages with a horizontal pin (38) on the other unit and nested housings (37, 57) on each unit which interengage on rotation of one unit relative to the other through an arc about the hook and pin means. An electrical connector (150, 152) is integrated with the mechanical coupling.

The drive unit includes a current limiting motor (211) control circuit which monitors the ON voltage across the main switching devices (210) and reduces the duty cycle of the drive signal (218) provided to the devices (210) upon a threshold voltage being exceeded. Secondary protection is provided by sensing the temperature of the devices (210) and adjusting the threshold voltage downward as the temperature rises.

EP 0 588 353 A2

This invention relates to personal mobility vehicles and/or motor controls therefor and has been devised particularly though not solely for electrically powered vehicles which are used as a mode of transportation for elderly and/or disabled persons.

Personal mobility vehicles e.g. scooters which have a chassis having a separable drive unit are known. With some such scooters the mechanical interconnection between the main chassis portion and the drive portion is effected by male and female connecting members provided on surfaces of the chassis portions which are to be connected being interengaged with each other by a sliding action in a direction parallel to the central longitudinal axis of the scooter chassis. Such an interengagement is awkward because it necessitates very accurate alignment of the male and female connector portions and a user must lift both of the chassis portions which may be heavy and/or awkward to lift to the same height, then support their weight as the portions are slid toward each other before locking together.

Mobility scooters are usually driven by electric motors which are powered by rechargeable batteries. Such scooters require operator controls to allow the direction and/or speed of the vehicle to be controlled by the user. In scooters presently available, the mechanical apparatus which is controlled by the user of the scooter has been known to malfunction resulting in possible damage to the scooter or injury to the operator from lack of control.

Additional problems with electrically powered scooters relate to the rechargeable batteries which power the electric motors. Battery life can be difficult to predict and it is desirable that a scooter have an accurate or reliable display of battery conditions since it is inconvenient to have batteries discharged while the scooter is being used, particularly when the scooter is in a location where replacement batteries and/or recharging apparatus is not readily accessible.

Most scooters have DC motors which are controlled using known PWM or chopper circuit principles and techniques. Such known PWM or chopper circuits commonly require protection against the output devices (commonly power mosfets) being damaged by currents exceeding the output device rating during periods of heavy loading e.g. in the case of a scooter, when the scooter is climbing an obstacle such as a curb or hill. Previously such protection was achieved by measuring the current through the motor or through the output devices using one of the following:

A. Current sense resistors having a known resistance being located in series with the circuit supplied by the output device. The voltage developed across the sense resistor is used to control a device which in turn controls the current through the output devices.

B. Magnetic sensors e.g. Hall Effect devices, which produce a voltage proportional to the magnetic effect produced by the current flowing in the output circuit.

Although the above methods allow control of the currents through the output devices, such protection strategies do not always allow maximum utilisation of the output device ratings and can be costly.

It is therefore an object of the present invention to provide a vehicle and/or motor control therefor which goes some way towards overcoming the abovementioned disadvantages, or which will at least provide the public with a useful choice.

Accordingly in one aspect the invention consists in a personal mobility vehicle having a chassis comprising a main portion and a separable drive unit, said main portion having at least one steerable ground engaging wheel, driver seating means and drive control means, said drive unit having at least one driven wheel, at least one electric motor operably connected to said at least the driven wheel, and a battery power supply, said control means controlling the supply of power from said battery power supply to said at least one electric motor, and said drive unit being mechanically coupled and decoupled from said main chassis portion by quick release means which incorporate electrical connections for connection of said power supply, said control means and said at least one electric motor.

In a further aspect the invention consists in a personal mobility vehicle comprising a main chassis and a separable drive unit including prime mover means and driven wheels, said main chassis and said drive unit being coupled together by a first connector means provided on one of said main chassis or said drive unit and a second connector means provided on the other of said main chassis or said drive unit, each said connector means having a connector portion, an abutment portion and lock means associated with said abutment portion, the construction and arrangement being such that said connector portions may be engaged with each other and relative angular rotation of said drive unit with respect to said main chassis about said connector portions makes said abutment portions contact each other in a manner such that the weights of said main chassis and said drive unit tend to maintain the connection between said connector means and allow actuation of said lock means to thereby prevent angular rotation in the reverse direction.

In a still further aspect the invention consists in a method of controlling a personal mobility vehicle having a control lever and control means responsive to said control lever so that manual manipulation of said control lever controls the direction of travel or speed of said vehicle, said method comprising the steps

EP 0 588 353 A2

of sensing the position of said control lever, sensing the rate of change of position of said control lever, and if said rate of change exceeds a predetermined rate of change, braking said vehicle removing power from said electric motor or reducing the rate of application of power to said motor.

In a still further aspect the invention consists in a method of controlling a personal mobility vehicle having a control lever movable between at least two positions, a first position corresponding to a neutral position and a second position corresponding to a command to move said vehicle in a predetermined direction, said method comprising the steps of sensing the position of said lever when vehicle power is switched on by a user and if said lever is not in said neutral position then preventing any operation of said vehicle until said lever is returned to said neutral position.

In a still further aspect the invention consists in a method of controlling a switching power transistor to ensure operation remains within the safe working limits of said transistor independent of load current comprising the steps of:

sensing the voltage between the transistor output electrodes during the periods when the transistor is switched on,

comparing the sensed voltage with a predetermined reference voltage; and

reducing the duty cycle of the transistor drive signal if the sensed voltage exceeds the reference voltage to thereby reduce the duration of the transistor ON periods.

In a still further aspect the invention consists in a current limiting circuit for a power transistor in a power switching circuit which controls power supplied to a load from a power supply in accordance with an input signal having a variable duty cycle comprising:

control means which alter the duty cycle of said input signal,

sensing means for detecting the voltage between the transistor output electrodes during the "on" states of said transistor,

comparator means for comparing the detected voltage with a predetermined threshold voltage, the output of said comparator means being provided to said control means to reduce the duty cycle of the input signal if said detected voltage exceeds said threshold voltage during an "on" state of said transistor.

Preferred embodiments of the invention will now be described with reference to the accompanying drawings in which;

Figure 1 is a perspective view of a personal mobility vehicle in accordance with the present invention;

Figure 2 is a front elevation of the drive unit of the vehicle of Figure 1;

Figure 3 is a plan view of the drive unit of Figure 2;

Figure 4 is a plan view of the chassis of the vehicle of Figure 1;

Figures 5, 6 and 7 are a front elevation, end elevation and rear elevation respectively of a motor and transmission in accordance with the present invention;

Figures 8 and 9 are perspective views of connector members in accordance with the present invention;

Figures 10 and 11 are side elevations of the interconnection of the drive unit with the main chassis of the vehicle of Figure 1 fully connected and partly connected respectively;

Figures 12 and 13 are an end elevation and a plan respectively of part of the main chassis with the drive unit connected showing a battery and battery box of the vehicle of Figure 1;

Figure 14 is a cross-section showing the connection between the main portion and the drive portion of a chassis including electrical auto-connectors;

Figure 15 is an elevation of a gas strut for the seat of a personal mobility vehicle;

Figure 16 is an elevation in cross section of the steering apparatus of a personal mobility vehicle;

Figure 17 is an elevation in cross section of a locking means for selecting the angle between the steering apparatus of Figure 16 and the chassis;

Figures 18, 19 and 20 are plan views of a control lever and handlebars of the vehicle of Figure 1;

Figures 21 to 24 are flow charts of the logic used for controlling a personal mobility vehicle in accordance with the present invention;

Figure 25 is a block diagram of an electronic circuit for control of an electric motor;

Figures 26, 27 and 28 are blocks diagram of an electronic circuit in accordance with the present invention for control of the motor switching devices of the circuit of Figure 25.

Figure 29 is a graph of transistor or resistance versus junction temperature for a 50NO5 field effect transistor, and Figure 30 is a graph of drain-source current versus transistor case temperature for the 50N05FET.

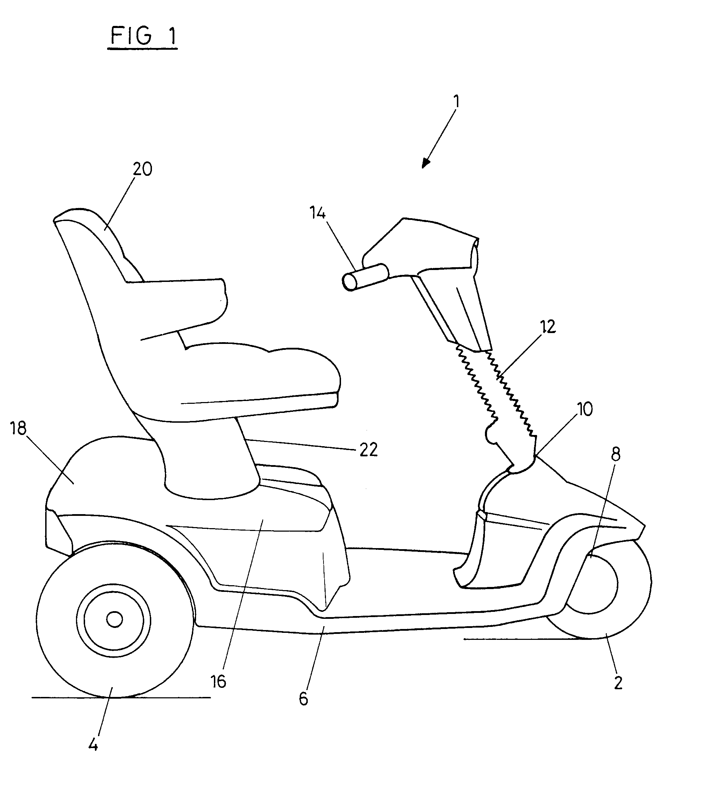

Referring to Figure 1 a vehicle for transportation for elderly and/or disabled persons is shown generally referenced 1. The vehicle has a front wheel 2 and rear wheels 4 rotatably connected to a chassis (not shown in Figure 1) which is covered by a fairing 6 formed from plastics, sheet metal or fibreglass material, for example the front wheel 2 is rotatably connected to a spindle 12 including front forks 8 which are pivotally connected to the chassis at area 10. The spindle or steering arm 12 is of adjustable length and has handlebars 14 attached to the upper end thereof. The fairing 6 has a separable portion 16 which may be removed for access to a battery compartment provided within the fairing. Another removable section 18 of the fairing is provided which may be removed to access the drive means for the rear wheels 4 comprising electric motors and control circuitry. A seat 20 is provided which is connected to the chassis by suspension means 22. The drive unit including the rear wheels 4 comprises a detachable portion of the chassis of the vehicle.

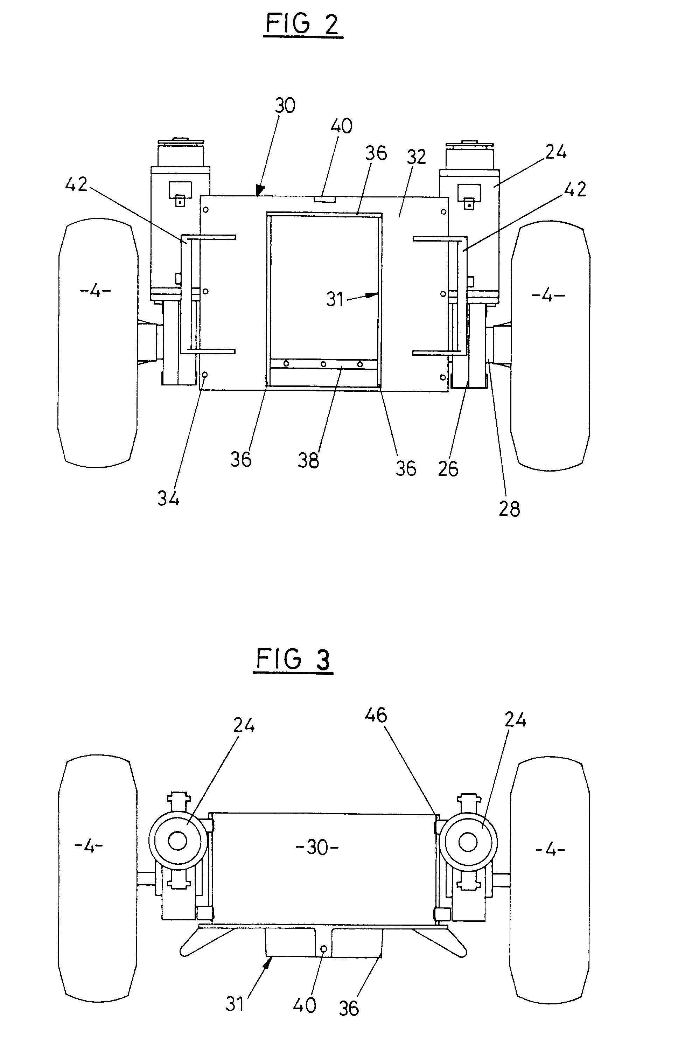

Referring to Figures 2 and 3 the drive unit is shown disconnected from the chassis and viewed from the side on which it is usually connected to the chassis proper. Electric motors 24 are mounted on a gearbox 26 and drive wheels 4 through a worm drive for example. Thus the axis of the armature of each motor 24 is mounted perpendicularly to the axis of rotation of each of the wheels 4. The wheels 4 are each connected to a rotatable driven axle 28 of a gearbox 26. The motors 24 and gearboxes 26 are mounted on a drive unit sub-chassis generally referenced 30 which is provided with a connector means 31 for attaching the drive unit to the main chassis. The connector means 31 are fixed to a back plate 32 which is fastened to the sub-chassis 30. The connector means 31 includes brackets 36 which support a pin or rod 38, and a fastening means comprising a projection 40. Handles 42 are fixed to the back plate 32 to enable a user to carry or otherwise move the drive unit independently of the main chassis.

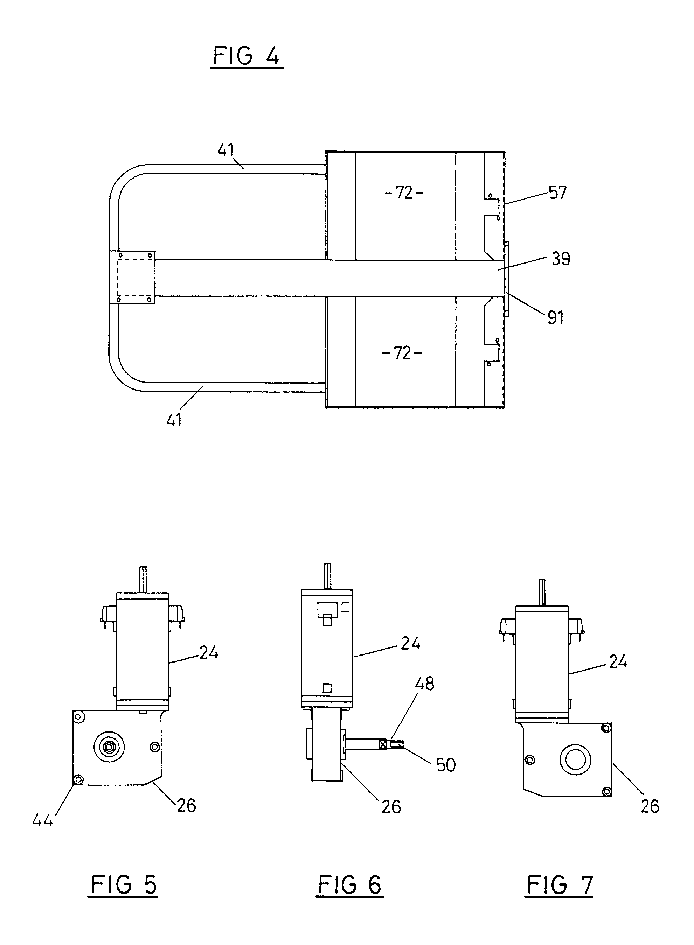

Referring to Figure 4 the main chassis is shown comprising a central member 39 fixed to battery compartments 72 and a peripheral member 41. A tapping plate 91 allows for the mounting of a connector 54 (see below) which allows connection to the drive unit.

Figures 5, 6 and 7 show each motor 24 and associated gearbox 26 in more detail. Mounting means comprising apertures 44 in portions of the gearbox are provided for mounting the gearbox onto sides 46 (see Figure 3) of the sub-chassis 30 (see Figure 3). The drive shaft/axle 48 (figure 6) is provided with an internal thread 50 by which wheel 4 is attached to the axle.

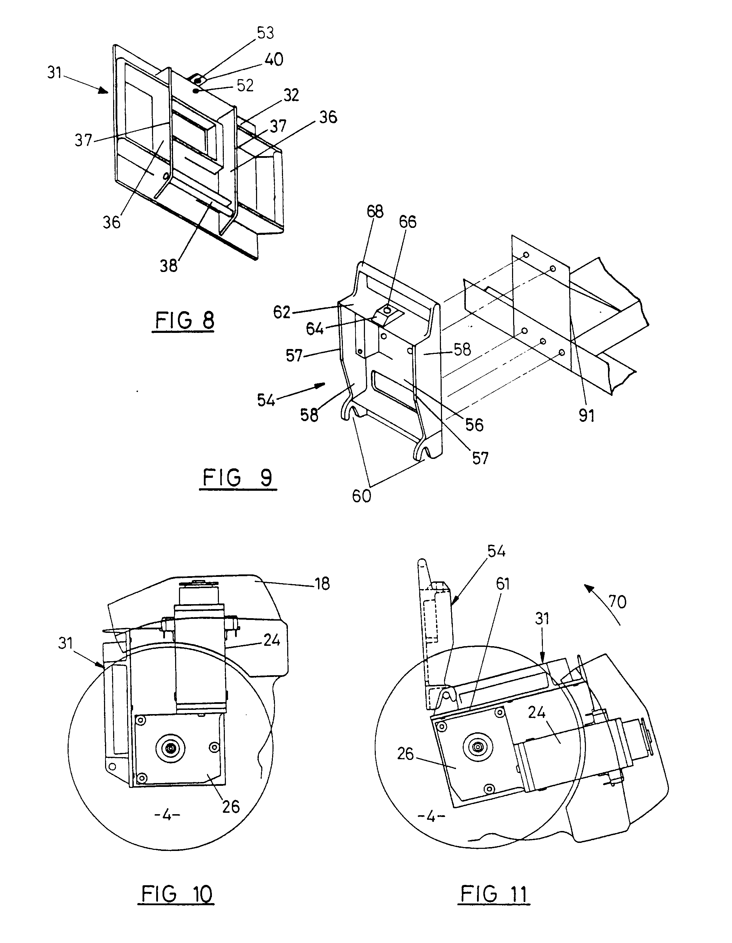

Figure 8 shows the connector 31. In addition to the features already described apertures 52 in the fastening means 40 and a co-linear aperture 53 in a transverse member bridging the two brackets 36 are shown.

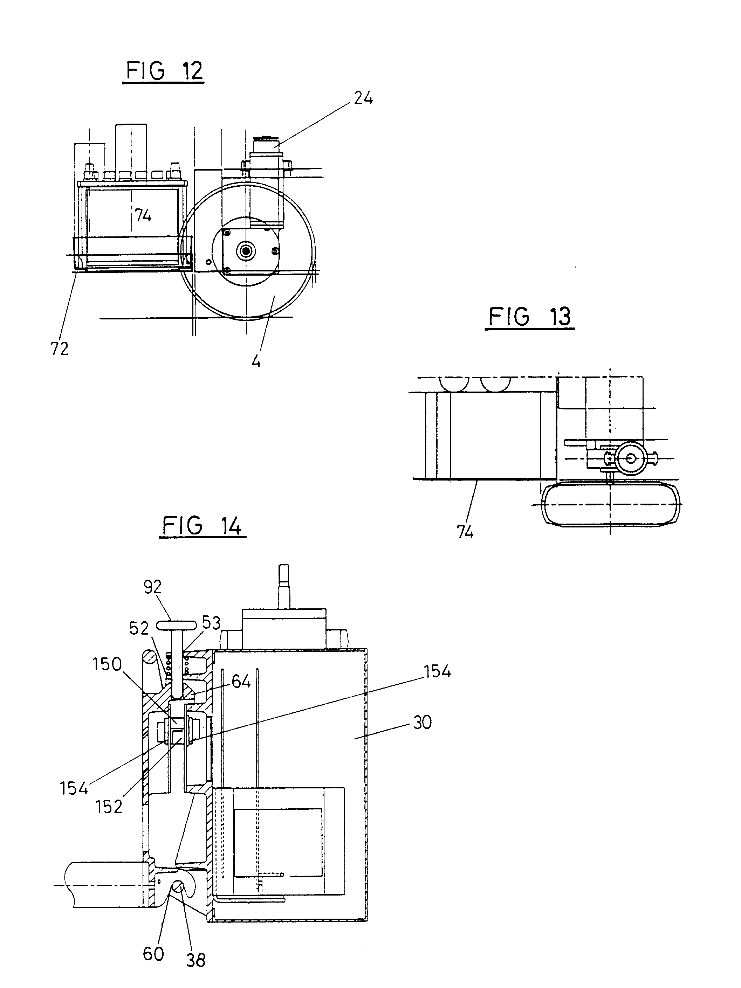

Figure 9 shows the complementary connector 54 which mounts on the main chassis. This has a base plate 56 which is attached to a lower part of a surface 57 of the main chassis of the vehicle as shown in the figure. The connector 54 has two supporting brackets 58 having connector hooks 60 which are configured to engage with pin 38 of connector 31 (Figure 8). A further support bracket 62 is provided having fastener means comprising raised member 64 having hole 66 therein. The raised member 64 is configured to be located within bracket 36 of the mating chamber 31 and a hole 66 substantially aligns with holes 52 and 53 in connector 31 to enable a hand manipulated spring loaded pin 92 to be placed therethrough for completing the connection between connectors 31 and 54 as shown in Figure 14. Connector 54 also has an integral handle 68 in order that a user may lift or otherwise move the main chassis of the vehicle.

Referring to Figure 10, the drive unit is shown with removable rear fairing portion 18 and wheel 4 in place. In Figure 11 the drive portion is shown with the connectors 31 and 54 interconnected so that the drive unit is connected to the main chassis as shown in Figure 1. To reassemble the vehicle chassis sections, a user would begin with the drive unit lying with the rear fairing portion 18 in contact with a flat surface such as a floor or the ground as shown in Figure 11. The user would then grasp the handle 68 of connector 54 to lift the main chassis and place the hooks 60 over rod 38 of connector 31 so that the relationship between the connectors 54 and 31 is substantially as shown in Figure 11. The user then lifts an outer portion of fairing 18 in a direction as shown by arrow 70 to rotate the drive unit relative the main chassis about rod 38 so that the two connectors 31 and 54 come together resulting in the configuration shown in Figure 10. Pin 92 (Figure 14) needs to be raised to allow this to happen. To fix the connectors 31 and 54 together, pin 92 is released to engage in hold 66 to prevent the connectors, and therefore the chassis units, from coming apart.

Referring to Figure 12 the drive unit described above is shown together with the rear portion of the main chassis. The latter includes a container 72 which accommodates a power supply comprising battery 74 for powering the drive unit electric motors 24. The battery container 72 is shown in plan view in Figure 13.

Referring to Figure 14 the arrangement for connecting the electrical circuits of the drive unit and main chassis is shown. It will be appreciated the scooter control circuits are located in the main chassis as well as the power supply. Preferably single self aligning hermaphroditic multiple coated electrical connectors 150 and 152 are used. The connectors 150 and 152 are able to be self-aligned due to flexible connections 154 between the terminal connectors and the brackets on which they are mounted and by the use of tapered guide pins and complementary apertures. Thus, in use when pin 38 has been placed in slot 60 and the drive portion 30 of the chassis is rotated so that the two chassis portions come together to be interconnected, terminal connector 150 will engage with terminal connector 152 to provide an electrical connection between the power supply in the main chassis portion and the electric motors in the drive portion without any separate manual plug-in connection being required.

Similar hermaphroditic self-aligning connectors are provided in the battery compartment 72 and on battery 74 so that upon a user placing the battery in the battery compartment, the battery terminals are connected to corresponding electrical terminals on the chassis without any separate manual plug-in connections being required.

The seat of the vehicle is adapted to be adjusted in height by the use of a gas strut and is selectively rotatable relative to the chassis.

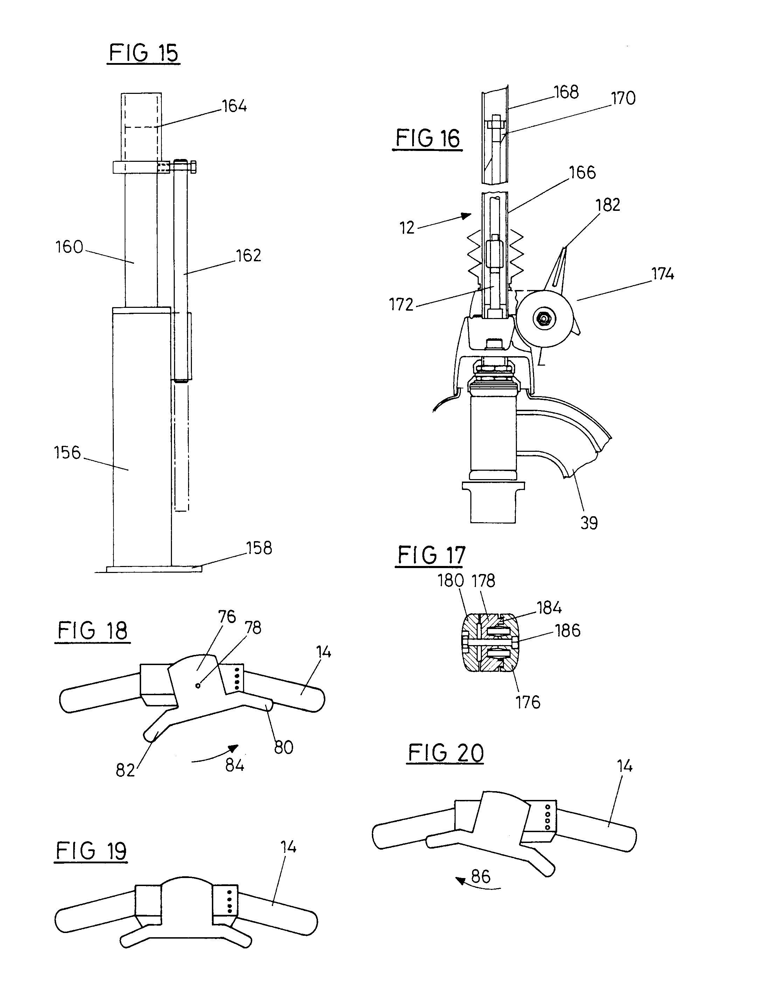

Figure 15 shows a cylinder portion 156 of the gas strut, the base 158 of which is mounted on the main portion of the chassis. The gas strut has a piston 160 disposed within the cylinder 156 and gases within cylinder 156 provide a resilient damping movement between piston 160 and cylinder 156. A guiding rod 162 is provided between piston 160 and cylinder 156 in order to prevent relative rotation between the piston and cylinder. The seat is affixed to end 164 of the piston.

The vehicle steering system will now be described.

Referring to Figure 16 the steering column or spindle 12 of the vehicle is shown in cross section pivotally connected to member 39 of the chassis. The spindle 12 comprises two tubular members 166 and 168 which are telescopically interconnected and are moveable relative to each other. A wedge 170 is provided at the upper end of tubular member 166. The other end of member 166 has a tensioning member 172 affixed thereto and the tensioning member 172 is threaded so that rotation of member 172 relative to tube 166 displaces wedge member 170 so that part of the wedge member 170 engages with tube 168 in order to adjust the length of spindle 12 to a suitable height for a user.

The spindle 12 may also be rotated about a further connector 174 in order to adjust the distance between the handlebars and the seat for each user. In Figure 17 the further connector member 174 is shown in cross section. Referring to Figure 17 a first part 180 is connected to the lower end of tubular member 166, portion 178 is connected to front forks of the vehicle and a portion 176 has a handle 182 attached thereto. Rotational movement of member 176 in e.g. a clockwise direction forces teeth 184 of portions 178 and 180 into interlocking interengagement ramps by means on member 176 adjusting the tension in threaded bolt 186 thus locking the spindle 12 in a selected angular position relative to the chassis of the vehicle.

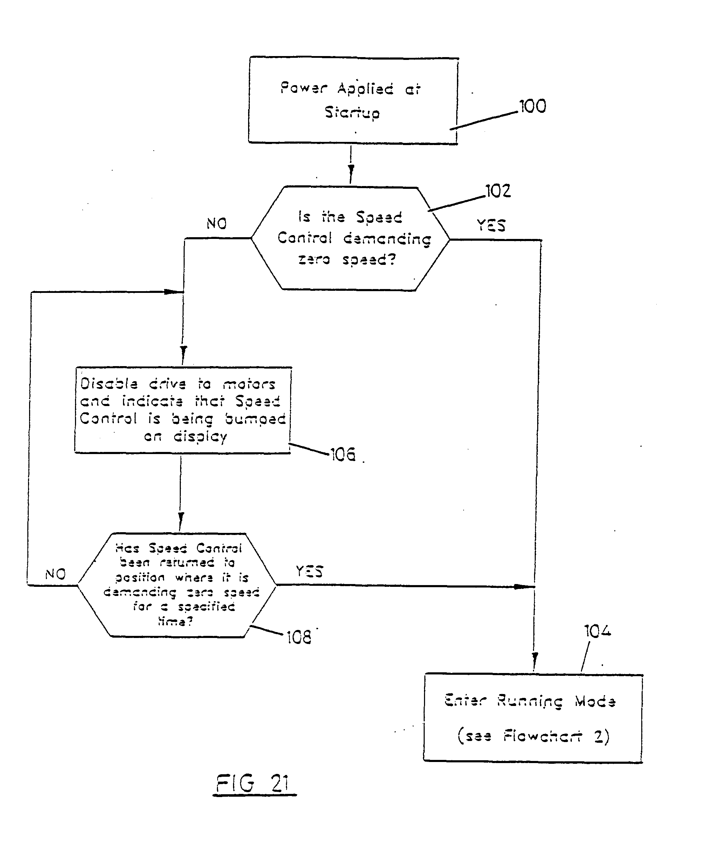

The steering column or spindle is rotated by handle bars 14 which are shown in Figures 18 to 20. A speed and direction control lever 76 is associated with the handle bars and pivotable about a central point 78. The control member 76 has two arms 80 and 82 extending therefrom for manipulation by e.g. the fingers of a user. Rotatable movement of the control member 76 about central point 78 in a direction indicated by arrow 84 (Figure 18) so that arm 80 is directed toward the handle bar adjacent thereto will move the vehicle in e.g. a forward direction. A biasing means is provided between the handle bars and control member 76 so that the control member is resiliently biased in the central disposition such as that shown in Figure 19 in which the vehicle is not propelled in either a forward or reverse direction. Movement of the control lever 76 in a direction as shown by arrow 86 so that arm 82 is moved toward the handle bar adjacent thereto will move the vehicle in e.g. a reverse direction. In other vehicles of the type described it has been found that the biasing means will sometimes fail to operate and when this occurs a user often has difficulty in returning the control lever 76 to the central disposition as shown in Figure 19. Difficulty in returning the control lever to the position shown in Figure 19 makes the vehicle very difficult to stop or very difficult to control. To obviate this problem the motor drive control means of the present invention monitors changes between a user requesting forward then reverse directions or requesting reverse then forward directions using control member 76. When a user rapidly rotates the control member 76 from say, a forward direction to a reverse direction (member 76 rotated from the disposition as shown in Figure 18 to the disposition shown in Figure 20) without a predetermined time interval (e.g. 100ms) in the position shown in Figure 19 being exceeded, then the control means assumes that the user is having difficulty in returning the control lever 76 to a position shown in Figure 19 and switches off power to the motor and brakes the vehicle to a stop or will at least delay the rate of application of power to the motor in the opposite direction.

The operation of the vehicle control means are described in more detail with reference to the flow charts in Figures 21 to 24 which set out the control logic of the basic functions.

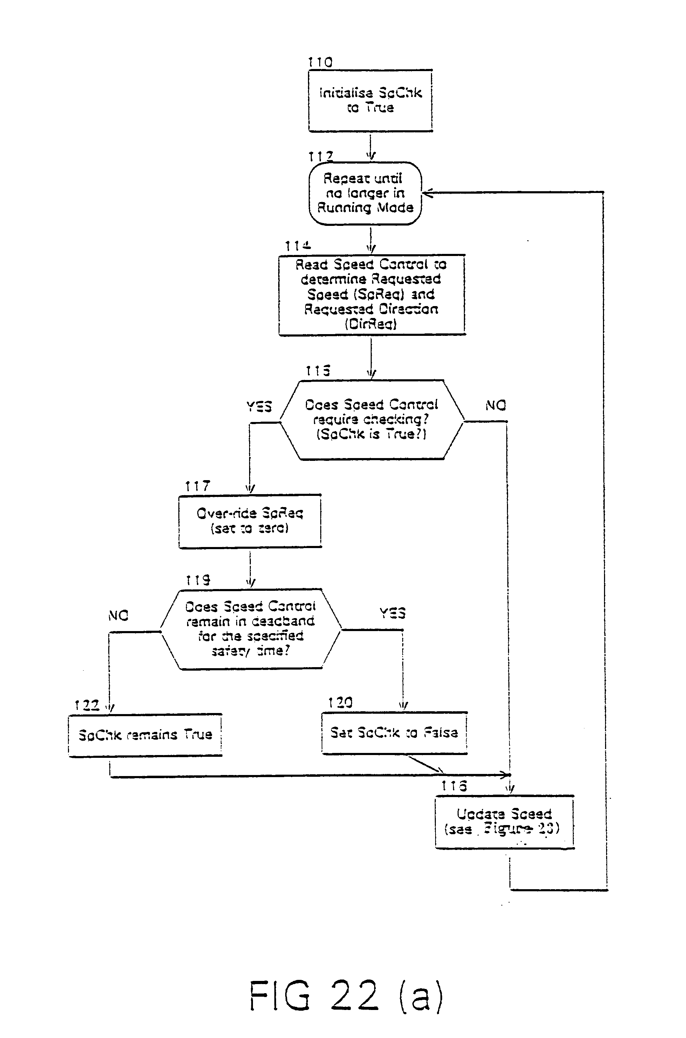

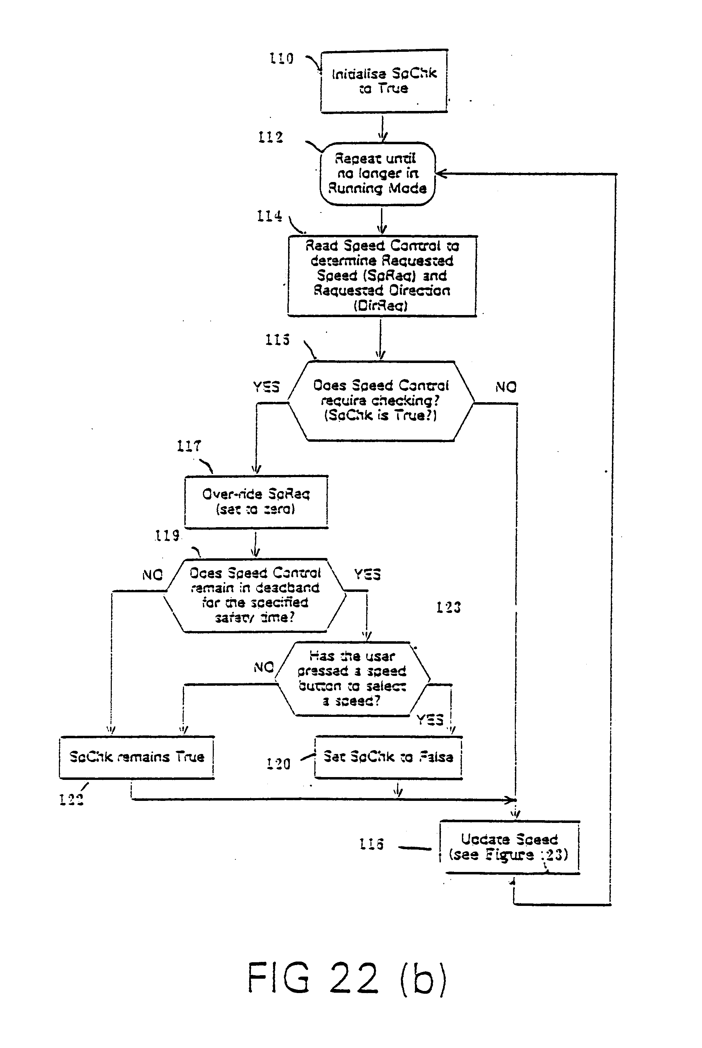

Referring to Figure 21 box 100 is symbolic of power supplied to the vehicle on start up - e.g. turning a key. The control means program then determines whether the speed control is demanding zero speed (box 102). This is determined by whether the control lever 76 is in the central and neutral position or some other position. If the control lever is in a neutral position then the speed control is demanding zero speed and the program logic progresses to the flow diagram of Figure 22A. However, if zero speed is not being demanded then the program causes power for the driving motors to be removed (box 106) and the control means will not enter the running mode described in Figure 22 until the speed control has been returned to the neutral position (box 108). The requirements for entry into the running mode can be made more stringent if the vehicle has speed selection buttons (eg slow/fast). In this case the running mode is not entered until a speed button is pressed while the speed control is in the neutral or central position. A flow chart for this scheme is shown in Figure 22B.

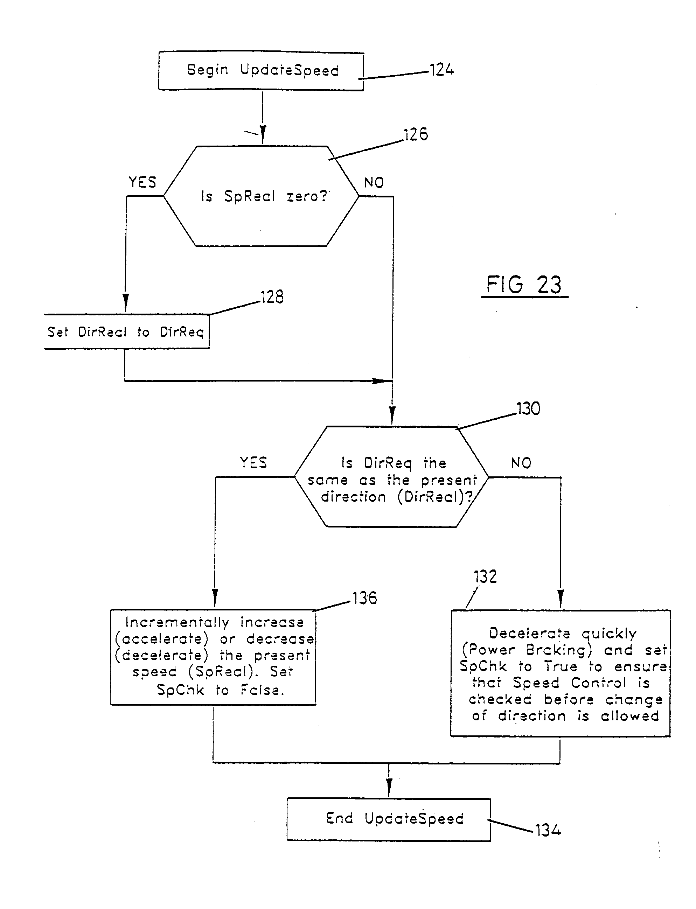

The program logic for the running mode will now be described with reference to Figures 22A and 23. "SPCHK" (box 110) is a flag which is set to true whenever the user demands an active braking mode which may be achieved by shorting the power terminals of the electric motor. It denotes that the speed control needs to be monitored for either return to neutral for a specified time (say, 100 milliseconds) or return to coincide with the direction of motion so that "normal" speed control may be resumed. "Deadband" (box 119) denotes the speed control signal range that requests zero speed (neutral). "SPREQ" (box 114) denotes the speed requested. "DIRREQ" (box 114) denotes whether the speed control signal value is requesting the forward or reverse direction. "SPREAL" (box 126) denotes the actual speed that the motors are being commanded to drive the vehicle by the control means and "DIRREAL" (box 128) denotes the actual direction that the motors are being commanded to drive the vehicle.

Referring to Figure 22A SPCHK is initialised to true (box 110) before a loop is entered into (box 112) which continues until the vehicle is no longer in the running mode. Firstly the speed control is read to determine the requested speed (SPREQ) and requested direction (DIRREQ) (box 114). SPCHK is checked to see if it is true (box 115). If not the logic proceeds to box 116 to update the speed in accordance with the logic in Figure 23 and thereafter returns to box 112. If SPCHK is true then SPREQ is set to zero (box 117). If the speed control remains in the deadband for a specified time (box 119) then SPCHK is set to false (box 120) and the speed is updated in accordance with the logic of Figure 23 (box 116). If the speed control does not remain in the deadband for the specified safety time then SPCHK remains true (box 122) and the speed is updated in accordance with the logic of Figure 23.

Referring to Figure 23 the update speed logic begins in box 124. SPREAL is checked to see if it is zero (box 126). If SPREAL is not zero then the logic proceeds to box 130. If SPREAL is zero then DIRREAL is set to DIRREQ (box 128) and the logic then continues to box 130. Referring to box 130 if DIRREQ is not the same as DIRREAL then active braking is initiated (box 132) and SPCHK is set to true before the logic ends in box 134. If DIRREQ is the same as DIRREAL then SPREAL is incrementally increased or decreased depending on whether acceleration or deceleration has been requested and SPCHK is set to false (box 136) before ending the logic path (box 134).

With battery powered vehicles it is important to know the state of the charge of the battery. The present control means includes logic to display an accurate indication of battery condition.

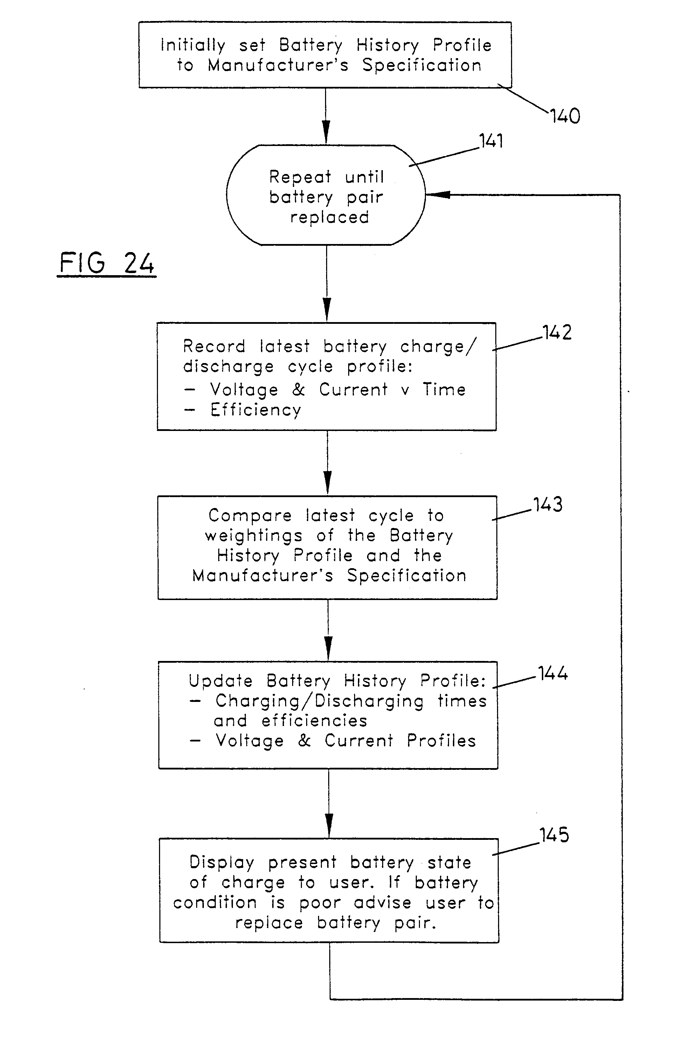

Referring to Figure 24 a flow chart of the logic used for determining and displaying the status of the battery is shown. Initially, (box 140), a battery history profile is entered in accordance with the manufacturer's specification. In box 141 the logic enters a loop which is continued for the life of the battery. The most recent battery charge/discharge cycle profile is recorded (box 142). Such a profile includes measurements of voltage and current against time and efficiency of the battery. This profile is compared to weightings of the battery history profile and the manufacturer's specification (box 143). The battery history profile is again updated (box 143). The battery's present state of charge is then displayed to the user (box 145). If the battery condition is poor a message is displayed to the user suggesting the battery be replaced. The logic then returns to box 141 to repeat the process.

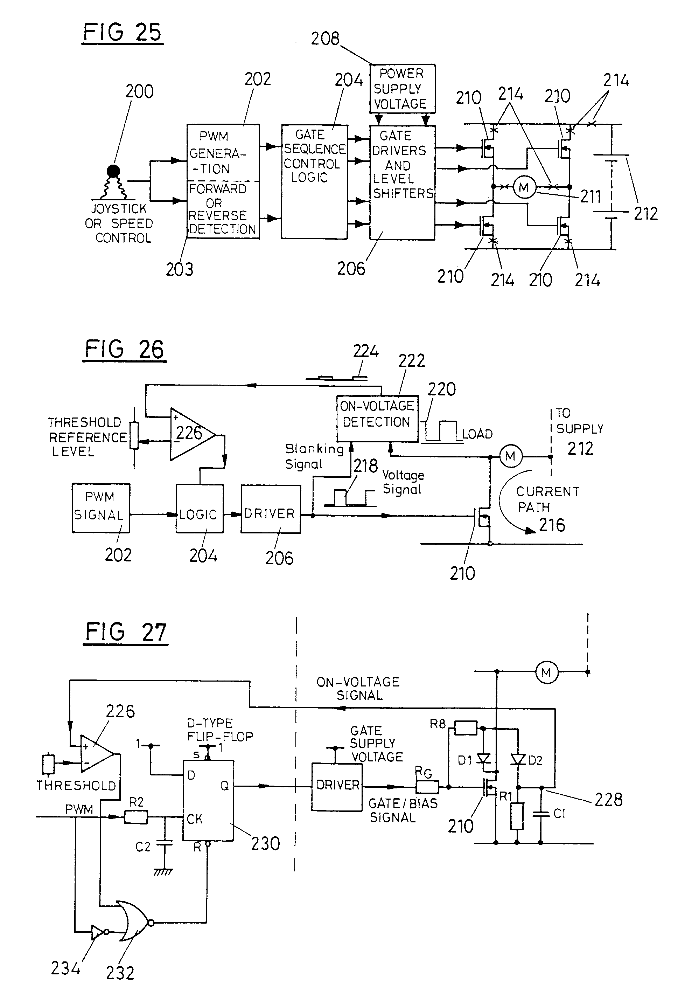

The vehicle motor variable frequency drive circuit is shown in figure 25. This would be suitable for control of either a powered wheelchair or a scooter. An input control 200 which could be a joystick or simple speed control lever is used to control the speed and/or direction of rotation of the motor and thus the vehicle. Signals provided by the joystick control 200 are provided to a pulse width modulator PWM and circuitry for detecting forward or reverse commands 202. The PWM signals and forward or reverse direction signals are fed to gate sequence control logic 204. The logic signals from circuit 204 are provided to gate drivers and level shifters supplied by a power supply 208.

The vehicle traction motor 211 which may have a permanent magnet stator and energisable rotor windings which are energised through brushes a power transistor bridge circuit across a direct current supply 212. These switching transistors 210, which may be power ANSFETs are controlled by switching signals from the gate drivers 206. Points 214 denote possible current detection nodes for placement of current sensors for providing feedback to the control circuit to prevent excessive current flow through the switching devices and hence damage to the devices.

Figure 26 shows such a circuit. Blocks 202, 204 and 206 are those already described. For the purposes of illustration only one of the bottom limb FETS 210 is shown connected to the motor 211 and it is assumed the relevant upper limb FET connects the motor to the top DC rail. The current path from the supply 212 through the motor 211 and the FET 210 is indicated by arrow 216. A representation of the PWM signal input to the gate if the FET is shown as square wave 218 and a representation of the output signal from the FET 210 is shown as square wave 220 which is a representation of the source-drain voltage. The input signal 218 and the output signal 220 are fed to "ON voltage" detection means 222 which provides an output waveform 224 which when not zero is representative of the FET source-drain voltage when the FET is turned "on". The "ON voltage" so obtained is provided to the non-inverting input of a comparator 226 and is compared with a threshold reference level voltage provided to the inverting input of the comparator 226. The output from comparator 226 is fed back to the logic circuitry 204 in such a way that the time period for which the FET 210 is in the "on" state is reduced if the "ON voltage" signal 224 exceeds the threshold reference level voltage.

Thus the FET 210 is prevented from exceeding its temperature rating by turning it off early during each PWM cycle at an instant when its "on voltage" exceeds a predetermined threshold level. The threshold level is chosen so that the FET will not be turned off early if it is cool or under light load. However, when the load current and the FET "on" resistance (which increases with the junction temperature of the device) combine to give a high voltage drop across the FET then the threshold will be approached. Once the threshold is reached, reduction in the "on" time for the FET results, which will tend to reduce the load current. Thus, a negative feedback loop is established whereby any further increase in load is countered by a further reduction in "on" time, thus maintaining a constant limiting value of "on voltage".

Means to implement the strategy of Figure 26 is shown in more detail in Figure 27. Referring to Figure 27, when the date drive is low, back-to-back diodes D1 and D2 prevent the low input signal from being passed through to the output at point 228 of the circuit which provides the "on voltage" signal to the non-inverting input of comparator 226. Since the diodes D1 and D2 are reversed biased when the gate signal is low, the output "on voltage" signal is substantially zero during the time when the FET 210 is switched to the "off" state. When the gate signal is high, diodes D1 and D2 are both forward biased and the voltage across the FET (which is "on" during this tune) is reflected in the output, "on voltage". A small capacitor C1 is used to attenuate noise spikes during on/off transitions of the "on voltage" signal and R1 provides a discharge path for C1.

One preferred logic circuit used for implementing the protection strategy described includes a D type flip-flop 230, a resistor R2, a capacitor C2, a NOR gate 232 and an inverter 234. The "on voltage" signal is compared with the threshold level and fed into the logic circuit which curtails the FET "on" time if necessary. This circuit is only an example of one type of circuit which may be used to effect the logic required for the protection circuitry. When the threshold voltage is exceeded, the flip-flop is reset by inverter 234 and NOR gate 232 which activate the reset pin R of the flip-flop, turning the FET to the "off" state. The "on voltage" returns to zero so that the flip-flop reset signal will disappear and the flip-flop will be ready to be set again on the next "on" transition of the PWM cycle. Resistor R2 and capacitor C2 provide a short delay, allowing time for the flip-flop reset signal to disappear so that the delayed positive edge on the clock input can set the flip-flop. Thus, the FET is switched on again by the flip-flop output Q (via the driver circuit) until either the PWM signal returns to the "off" part of the cycle, or the threshold on voltage is exceeded again, which ever occurs first.

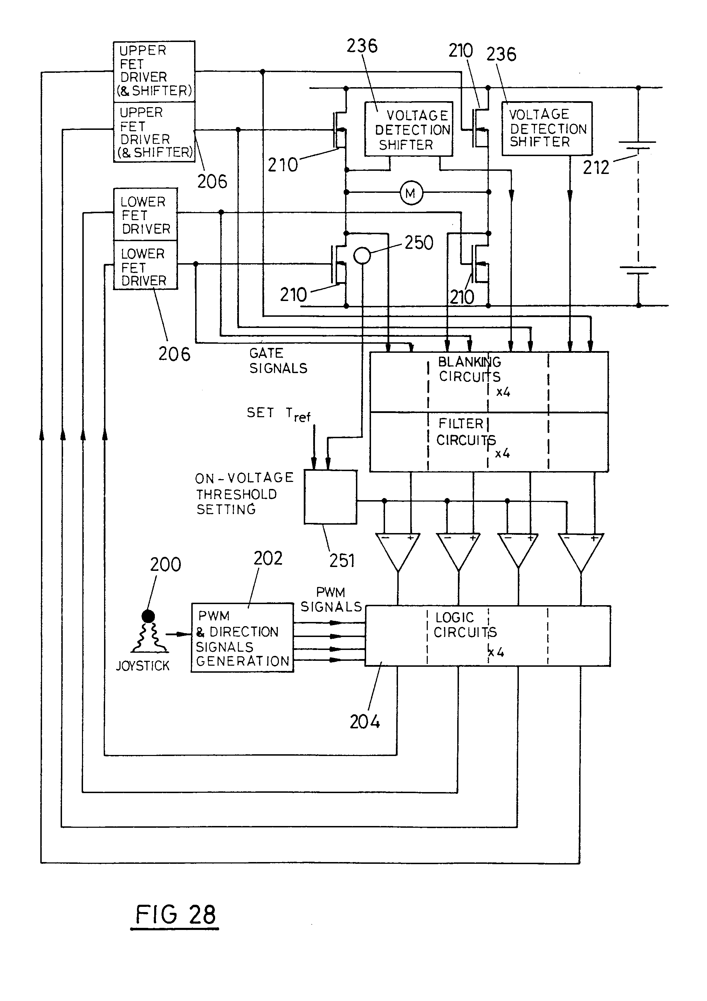

The protection strategy described above may be extended to protect each device in a full H-bridge drive circuit (as shown in figure 25) as shown in figure 28. The same reference numerals are used as described with reference to figure 25. Voltage detection level shifter circuits 236 are provided for the upper limb MOSFETs.

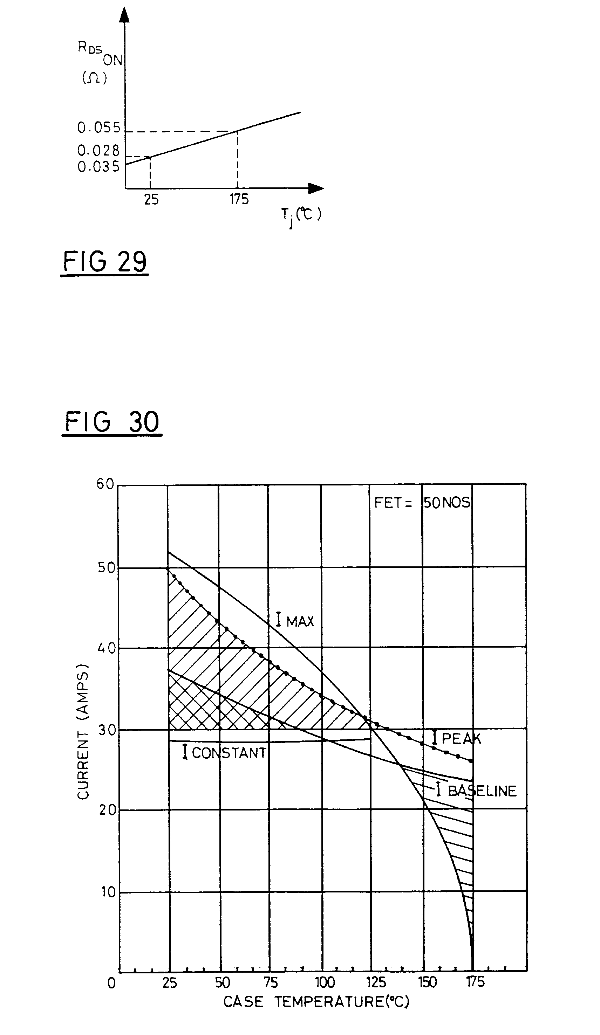

The graphs of Figures 29 and 30 illustrate that higher currents can be safely handled by a typical output transistor (e.g. MOSFET) using the strategy described above than with conventional current-limiting techniques. The main parameter of a MOSFET which should not be exceeded is its junction temperature limit. This is 175°C in the case of the THOMPSON 50N05 MOSFET from which data has been taken for figures 29 and 30. The junction temperature is influenced by the power dissipated in the device and by the effectiveness of the heat sinking provided and can be expressed:

$$T_j = T_c + P.\theta_{jc}$$

where $T_j$ = junction temperature,
$T_c$ = case temperature
P = power dissipation

$\theta_{jc}$ = thermal resistance from junction to case

The power dissipation is determined by the load current and the MOSFET on-resistance, $R_{DS}(ON)$ according to:

$P = I_D{}^2 R_{DS}(ON)$

The on-resistance in turn is a function of junction temperature as shown in Figure 29, by virtue of the temperature coefficient of resistance for doped silicon. The relationship between $R_{DS}$ and junction temperature shown in Figure 29 is;

$R_{DS}(ON) \approx 0.0235(1 + 0.0075T_j)$,
assuming $\theta_{jc} = 1\,°C/W$

$R_{DS}(ON)$ at a junction temperature of 25°C is known. The ratio of on-resistance between 175°C to 25°C is 1.95. Thus $R_{DS}(ON)$ at a junction temperature of 175°C is 1.95 $R_{DS}(ON)$ at $T_j = 25°C$. These formulae combine to give a function for maximum safe operating current as follows;

$$I_{max} = \sqrt{\frac{175 - Tc}{1.95 . R(25)}}$$

where R(25) is the on resistance at 25°C junction temperature. The MOSFET source-drain voltage when it is on, is given by;

$V_{ON} = I_D . R_{DS}(ON)$

If this is maintained constant at say, 1.4V; then the peak value for current can be;

$$Ipeak = \frac{1.4}{Rj}$$

where $R_j$ is the on resistance at that junction temperature, so Ipeak = Inrush current when transistor is first turned on with $T_j$ = Tc and $V_{ON}$ Limited to 1.4v, so

$$Ipeak = \frac{1.4}{0.0235(1 + 0.0075Tj)}$$

Figure 30 shows $I_{peak}$ versus Tc for the initial condition where the case and junction temperatures are equal. If the device was operated at this current for some duration, the junction temperature would rise and the current would drop vertically on the graph until thermal equilibrium is reached.

The "baseline" current, or the equilibrium current if $T_c$ is maintained constant and $V_{ON}$ limited to 1.4v is given by;

$$IBASELINE = \frac{1.4[1 - I^2(0.0235)(0.0075)]}{0.0235(1 + 0.0075Tc)}$$

8

Using the formulae above, equilibrium currents have been calculated and graphed for constant case temperatures from 25°C. This is the curved $I_{BASELINE}$ which the current will equilibrate to. However, the case temperature will not remain constant because the heat sinking is not infinite. As the case warms up, the current will follow the baseline downwards as shown. Eventually this too will equilibrate at some value where the power radiated by the heatsink matches the device dissipation. Under adverse ambient conditions, this could venture into the shaded region where the baseline crosses the line representing rated current for the device.

This may be protected against by measuring the device case temperature with a sensor 250 (see Figure 28) and providing a voltage control circuit 251 to reduce the on voltage threshold if a reference temperature TREF is exceeded (e.g. above 100°C in the example).

This secondary protection is relatively non-critical and the temperature measurement point may be at the heatsink with a suitable correction factor applied for temperature gradient between case and sink (e.g. add 20°C to reading determined by experiment). The example supports this non-critical nature of the secondary protection. By the time this case temperature threshold is reached, the voltage threshold strategy has already virtually halved the current allowed to pass through the device (e.g. 50A at 25°C initially, reduced to 29A at 100°C case temperature). The example also illustrates the improved current output capability compared with more expensive conventional fixed current limiting circuits. The $I_{CONSTANT}$ locus represents the conventional constant current limit which could be safely used up to a case temperature of $T_c = 125°C$. The heavily shaded region on the graph of Figure 30 represents the sustainable gain in transient current above the constant current method. The heavily shaded region and the lightly shaded region represents the gain in transient output current over the constant current method.

In summary, by simply limiting the on-voltage of a common power MOSFET, a substantial level of overload protection can be achieved. This can be supplemented with a heatsink temperature limiting scheme to provide comprehensive protection of a driver circuit.

The features disclosed in the foregoing description, in the claims and/or in the accompanying drawings may, both separately and in any combination thereof, be material for realising the invention in diverse forms thereof.

**Claims**

1. A personal mobility vehicle (1) having a chassis comprising a main portion and a separable drive unit (30), said main portion having at least one steerable ground engaging wheel (2), driver seating means (20), a battery power supply (74) and drive control means, said drive unit having at least one driven wheel (4), and at least one electric motor (24) operably connected to said at least one driven wheel (4), said control means controlling the supply of power from said battery power supply (74) to said at least one electric motor (24), *characterised in that* said drive unit (30) is mechanically coupled and decoupled from said main chassis portion by quick release means (31, 54) which incorporate electrical connections (150, 152) for connection of said power supply (74), said control means and said at least one electric motor (24).

2. A personal mobility vehicle (1) comprising a main chassis and a separable drive unit (30) including prime mover means (24) and driven wheels (4), *characterised in that* said main chassis and said drive unit (30) are coupled together by a first connector means (31) provided on one of said main chassis or said drive unit and a second connector means (54) provided on the other of said main chassis or said drive unit (30), each said connector means (31, 54) has a connector portion (38, 60), an abutment portion (37, 57) and lock means (92) associated with said abutment portion, such that said connector portions (38, 60) may be engaged with each other and relative angular rotation of said drive unit (30) with respect to said main chassis about said connector portions (38, 60) makes said abutment portions (37, 57) contact each other in a manner such that the weights of said main chassis and said drive unit tend to maintain the connection between said connector means (31, 54) and allow actuation of said lock means (92) to thereby prevent angular rotation in the reverse direction.

3. A personal mobility vehicle as claimed in either of claims 1 or 2 wherein the connector portions (60) of said first connector means (54) comprise hook means (60), the connector portions of said second connector means (31) comprise hook receiving means (38) configured to allow relative angular rotation with said hook means (60), said lock means (92) comprise protuberances (40, 64) on said abutment means, having apertures (52, 53, 66) which align when said abutment means are in contact and a pin actuable (92) to project through said apertures (52, 53, 66) to prevent separating of said protuberances.

EP 0 588 353 A2

**4.** A personal mobility vehicle as claimed in any one of claims 1 to 3 wherein said first and second connector means (31, 54) include mating electrical connectors (150, 152) mounted in said abutment means (37, 57), said electrical connectors (150, 152) each mounted so as to have a limited freedom of movement in the plane of said abutment means and having tapered guide means which interact as the abutment means are closed against each other to cause the connectors to self align and then mate together when the abutment means are closed.

**5.** A personal mobility vehicle as claimed in any one of claims 1 to 4 wherein said main chassis includes steering apparatus, said steering apparatus comprising a spindle (12) rotatably mounted relative to a chassis of said vehicle, one end of said spindle (12) having a wheel (2) rotatably mounted relative thereto and the other end of said spindle having a steering handle (14), said spindle (12) comprising a first portion (166) and a second portion (168), one of said portions being movably located within the other and locking means (170) for releasably locking said portions together to select the length of said spindle.

**6.** A personal mobility vehicle according to claim 5 wherein said spindle (12) also includes a third portion (178) engageable with said first and second portions (166, 168) by pivotal locking means (186), said locking means releasably locking said third portion to said first and second portions to adjust the angle of said first and second portions relative to said chassis.

**7.** A method of controlling a personal mobility vehicle (1) having a control lever (76) and control means responsive to said control lever (76) so that manual manipulation of said control lever (76) controls the direction of travel or speed of said vehicle, said method *characterised by* the steps of sensing the position of said control lever (76), sensing the rate of change of position of said control lever (76), and if said rate of change exceeds a predetermined rate of change, braking said vehicle (1).

**8.** A method of controlling a personal mobility vehicle according to claim 7 wherein said step of sensing the rate of change of position of said control member comprises the steps of sensing the rate of change of position from the position corresponding to a first direction of travel to a position corresponding to a second direction of travel.

**9.** A method of controlling a personal mobility vehicle (1) having a control lever (76) movable between at least two positions, a first position corresponding to a neutral position and a second position corresponding to a command to move said vehicle in a predetermined direction, said method *characterised by* the steps of sensing the position of said lever (76) when vehicle power is switched on by a user and if said lever (76) is not in said neutral position then preventing any operation of said vehicle (1) until said lever (76) is returned to said neutral position.

**10.** A method of controlling a switching power transistor (210) to ensure operation remains within the safe working limits of said transistor independent of load current *characterised by* the steps of:
sensing the voltage (220) between the transistor (210) output electrodes during the periods when the transistor is switched on,
comparing the sensed voltage (224) with a predetermined reference voltage, and
reducing the duty cycle of the transistor drive signal (218) if the sensed voltage (224) exceeds the reference voltage to thereby reduce the duration of the transistor ON periods.

**11.** A current limiting circuit for a power transistor (210) in a power switching circuit which controls power supplied to a load (211) from a power supply (212) in accordance with an input signal (218) having a variable duty cycle *characterised in that*:
control means (204) alter the duty cycle of said input signal,
sensing means (222) detect the voltage (224) between the transistor output electrodes during the "on" states of said transistor,
comparator means (226) compare the detected voltage (224) with a predetermined threshold voltage, the output of said comparator means (226) is provided to said control means (204) to reduce the duty cycle of the input signal (218) if said detected voltage (224) exceeds said threshold voltage during an "on" state of said transistor (210).

10

**12.** A current limiting circuit as claimed in claim 11 including a temperature transducer (250) thermally coupled to said power transistor (210), a voltage control circuit (251) which provides said predetermined threshold voltage, said voltage control circuit (251) receiving as one input the output of said transducer and said voltage control circuit (251) varying its output voltage when the transducer temperature exceeds a predetermined maximum temperature to thereby reduce the duty cycle of said input signal (218).

## FIG 1

## FIG 2

## FIG 3

## FIG 4

## FIG 5

## FIG 6

## FIG 7

FIG 8

FIG 9

FIG 10

FIG 11

FIG 12

FIG 13

FIG 14

FIG 15

164

160

162

156

158

FIG 16

168    170

12

166

182

172    174

39

FIG 17

180  178

184

186

176

FIG 18

76  78

14

82    84    80

FIG 20

14

86

FIG 19

14

Power Applied at
Startup — 100

Is the Speed
Control demanding
zero speed? — 102

NO          YES

Disable drive to motors
and indicate that Speed
Control is being bumped
on display — 106

Has Speed Control
been returned to
position where it is
demanding zero speed
for a specified
time? — 108

NO          YES

Enter Running Mode
(see Flowchart 2) — 104

FIG 21

18

110
```
Initialise SpChk
to True
```

112
```
Repeat until
no longer in
Running Mode
```

114
```
Read Speed Control to
determine Requested
Speed (SpReq) and
Requested Direction
(DirReq)
```

115
```
Does Speed Control
require checking?
(SpChk is True?)
```
YES                                           NO

117
```
Over-ride SpReq
(set to zero)
```

119
```
Does Speed Control
remain in deadband
for the specified
safety time?
```
NO                              YES

122
```
SpChk remains True
```

120
```
Set SpChk to False
```

116
```
Update Speed
(see Figure 23)
```

FIG 22 (a)

19

110 — Initialise SpChk to True

112 — Repeat until no longer in Running Mode

114 — Read Speed Control to determine Requested Speed (SpReq) and Requested Direction (DirReq)

115 — Does Speed Control require checking? (SpChk is True?)

YES / NO

117 — Over-ride SpReq (set to zero)

119 — Does Speed Control remain in deadband for the specified safety time?

NO / YES

123 — Has the user pressed a speed button to select a speed?

NO / YES

SpChk remains True

120 — Set SpChk to False

122

116 — Update Speed (see Figure 23)

FIG 22 (b)

Begin UpdateSpeed ——124

Is SpReal zero? ——126

YES

NO

## FIG 23

Set DirReal to DirReq ——128

Is DirReq the same as the present direction (DirReal)? ——130

YES

NO

Incrementally increase (accelerate) or decrease (decelerate) the present speed (SpReal). Set SpChk to False. ——136

132

Decelerate quickly (Power Braking) and set SpChk to True to ensure that Speed Control is checked before change of direction is allowed

End UpdateSpeed ——134

21

Initially set Battery History Profile
to Manufacturer's Specification

— 140

Repeat until
battery pair
replaced

— 141

## FIG 24

Record latest battery charge/
discharge cycle profile:
- Voltage & Current v Time
- Efficiency

— 142

Compare latest cycle to
weightings of the Battery
History Profile and the
Manufacturer's Specification

— 143

Update Battery History Profile:
- Charging/Discharging times
  and efficiencies
- Voltage & Current Profiles

— 144

Display present battery state
of charge to user. If battery
condition is poor advise user to
replace battery pair.

— 145

## FIG 25

## FIG 26

## FIG 27

23

FIG 28

FIG 29

FIG 30